# EUROPEAN PATENT APPLICATION

(11) **EP 4 470 362 A1**
(43) Date of publication of application: **04.12.2024**
(21) Application number: 24179050.0
(22) Date of filing: 30.05.2024
(51) Int. Cl.: A01G 3/02, A01G 3/047

(54) **SHOCK ABSORBER FOR CUTTING TOOL**

(30) Priority: 30.05.2023 GB 202308025
(71) Applicant: Westland Horticulture Limited, Belfast, Antrim BT9 6SA (GB)
(72) Inventor: BARNARD, Tim, Dungannon, BT70 1NJ (GB); McARDLE, Simon John, Dungannon, BT70 1NJ (GB)
(74) Representative: Murgitroyd & Company

(57) **Abstract**

A cutting tool 1 comprises a first shear part 2 and a second shear part 3. The second shear part 3 is rotatably connected to the first shear part 2. At least one of the first and second shear parts 2,3 comprises a cutting blade 4,6. At least one of the first and second shear parts 2,3 comprises shock absorption means 20, 30.

## Description

The invention relates to cutting tools, such as garden cutting tools.

### Background

Cutting tools such as shears, secateurs and the like typically comprise a first shear part and a second shear part, at least one of the shear parts having a cutting blade and both shear parts having a shaft, lever arm or handle which are arranged at opposite sides of a pivot. The pivot connects the first and second shear parts to each other in a rotatable manner, allowing the blades and handles to be opened and closed.

Normally when using cutting tools such as hedge shears a user will feel the impact of the blades when they come to their stop position. The impact of the blades is transferred to the shafts, lever arms or handles of the tool. This results in an uncomfortable jarring that is felt in the hands and wrists of the user. Furthermore, in conventional cutting tools such as loppers there can be resistance for the user to open them back up again after the blades have come to their stop position. This means that when the blades reach their stop position it can be difficult for them to be separated in advance of the next cut.

### Summary of the invention

According to a first aspect of the invention there is provided a cutting tool comprising a first shear part rotatably connected to a second shear part, wherein at least one of the first and second shear parts comprises a cutting blade and wherein at least one of the first and second shear parts comprises shock absorption means for absorbing the impact created by the closure of the first and second shear parts. Advantageously, the shock absorption means is configured to limit and/or cushion the movement of the first and second shear parts towards each other.

According to a further aspect of the invention there is provided a cutting tool comprising a first shear part and a second shear part, wherein the second shear part is rotatably connected to the first shear part, wherein at least one of the first and second shear parts comprises a cutting blade and wherein at least one of the first and second shear parts comprises shock absorption means. Advantageously, the shock absorption means is configured to prevent the uncomfortable jarring which results from the impact of the blades when they come to their stop position.

According to a further aspect of the invention there is provided a shock absorption means for attachment to a shear part or handle of a cutting tool.

Optionally each shear part comprises a lever section.

Optionally each lever section comprises a handle.

Optionally each lever section comprises a handle at the distal end thereof. Optionally the distal end of the lever section is located away from a blade portion of the shear part.

Optionally each lever section comprises a shaft.

Optionally each lever section comprises a shaft located between the handle and the blade portion.

Optionally each lever section comprises a shock absorption means. Optionally each lever section comprises a shock absorption means at a proximal end thereof.

Optionally the proximal end of the lever section is located towards or adjacent to the blade portion.

Optionally the cutting tool comprises a pivot means.

Optionally the first and second shear parts are rotatably held together by the pivot means.

Optionally the cutting tool has an open position. Advantageously, in the open position an object may be placed between the blade portions for cutting.

Optionally the cutting tool has a closed or stop position. Advantageously, in the closed or stop position the blades of the cutting tool are not exposed. Optionally the shock absorption means comprises a shock absorber.

Optionally the shock absorption means is at least partly made from a resilient material, for example rubber or foam. Advantageously, such a resilient material can be used to absorb energy.

Optionally the shock absorption means is made from rubber or foam.

Optionally the shock absorption means comprises a shock absorbing member, such as a tapered shock absorbing member.

Optionally, the shock absorbing member is a shock absorber.

Optionally the shock absorption means comprises a hollow shock absorbing member, such as a tubular shock absorbing member.

Optionally the shock absorption means comprises a resilient shock absorbing member.

Optionally the shock absorption means comprises at least one cutout or hole. Advantageously, the at least one cutout or hole is configured to allow the shock absorption means to flex, in use.

Optionally the shock absorption means comprises at least one through hole. Optionally the shock absorption means has at least one cutout or hole which extends along an axis, such as a linear or substantially linear axis.

Optionally the axis of the at least one cutout or hole is parallel or substantially parallel to the longest dimension of at least one of the first shear part and the second shear part. Advantageously, the at least one cutout or hole is configured to allow the shock absorption means to flex while reducing the likelihood of material becoming lodged in the cutout or hole, in use.

Optionally the axis of the cutout or hole is parallel or substantially parallel to the longest dimension of the shear part to which the shock absorption means is attached.

Optionally the shock absorption means has a through hole.

Optionally the shock absorption means has a cut out or hole along its axis. Advantageously, this results in greater compression of the shock absorbing means body and more of a cushioning effect for the user.

Optionally the shock absorption means is configured for absorbing the impact created by the closure of the first and second shear parts.

Optionally the shock absorption means is configured for absorbing the impact created by the closure of the respective blades, handles or shafts of the first and second shear parts.

Optionally the shock absorption means is configured to absorb an impact from at least one of the first shear part and the second shear part.

Optionally the shock absorption means is configured to absorb an impact resulting from the blades when they come to their closed or stop position. Optionally the shock absorption means is configured to absorb an impact from a shear part, a handle or shaft and/or another shock absorbing means.

Optionally the shock absorption means provides a spring back effect. Advantageously, as there is compression of the shock absorption means there is a spring back effect. This benefits the user as it opens the blades up again ready for the next cut.

Optionally the shock absorption means comprises an attachment means. Advantageously, the attachment means facilitates attachment of the shock absorption means to a shear part or handle of the cutting tool.

Optionally the shock absorption means comprises an attachment means for attaching the shock absorption means to a shear part or handle of the cutting tool. Advantageously, the attachment means allows the shock absorption means to be rigidly fixed with respect to a shear part of the cutting tool. Optionally the attachment means is attachable to a shear part of the cutting tool via a fixing means.

Optionally the fixing means comprises a screw.

Optionally, the fixing means passes through the attachment means of the shock absorption means, in use.

Optionally the attachment means facilitates attachment of the shock absorption means to a handle or shaft of a shear part of the cutting tool. Advantageously, the shock absorption means is able to absorb the energy from an impact without getting in the way of the cutting blade(s) or the hands of the user.

Optionally at least a part of a handle or shaft of a shear part of the cutting tool passes through the attachment means, in use.

Optionally the attachment means comprises an aperture which extends through the shock absorption means. Advantageously, the aperture is configured to receive the handle or shaft of a shear part and retain the shock absorption means on the handle or shaft of said shear part.

Optionally at least a part of a handle or shaft of a shear part of the cutting tool passes through the aperture, in use.

Optionally the aperture extends along an axis.

Optionally the axis of the aperture is parallel or substantially parallel to the axis of the cutout or hole.

Optionally the axis of the aperture is parallel or substantially parallel to the axis of the cutout or hole in the shock absorbing member.

Optionally the aperture is configured to receive part of the handle or shaft of a shear part of the cutting tool.

Optionally the aperture is configured to retain the attachment means on the handle or shaft of a shear part of the cutting tool.

Optionally the aperture is configured to provide an interference fit or friction fit between the attachment means and the handle or shaft of a shear part of the cutting tool. Advantageously, the interference fit or friction fit prevents or reduces movement of the shock absorption means along the length of the shaft or handle.

Optionally the aperture is configured to surround part of the handle or shaft of a shear part of the cutting tool.

Optionally the aperture is configured to surround part of the handle or shaft of a shear part of the cutting tool.

Optionally the aperture is configured to encircle part of the handle or shaft of a shear part of the cutting tool.

Optionally the cutting tool comprises one shock absorption means.

Optionally the cutting tool comprises exactly one shock absorption means. Advantageously, the exactly one shock absorption means can be used to absorb an impact with a shear part or bumper of the cutting tool.

Optionally the cutting tool comprises a bumper.

Optionally the cutting tool comprises a resilient bumper.

Optionally the bumper comprises rubber or foam.

Optionally the bumper is a solid ring which surrounds a shaft of a lever portion.

Optionally one of the first and second shear parts comprises a shock absorption means.

Optionally the cutting tool comprises two shock absorption means. Advantageously, each shock absorption means can be used to absorb an impact with another shock absorption means of the cutting tool.

Optionally the cutting tool comprises exactly two shock absorption means. Optionally the cutting tool is a garden cutting tool.

Optionally the cutting tool is a pair of shears such as hedge shears or lawn shears,

Optionally the cutting tool is a pair of scissors, such as garden scissors. Optionally the cutting tool is a pair of loppers or secateurs.

Optionally each of the first and second shear parts comprise a respective shock absorption means.

### Brief description of the drawings

The invention will be described by way of example only referring to the figures, in which:
Figure 1 illustrates a perspective view of a cutting tool according to an aspect of the invention.
Figure 2 illustrates a top view of the cutting tool of figure 1 in a closed configuration or stop position.
Figure 3 illustrates a perspective view of a cutting tool according to an aspect of the invention.
Figure 4 illustrates a perspective view of a cutting tool according to an aspect of the invention.
Figure 5 illustrates a perspective view of a cutting tool according to an aspect of the invention.
Figure 6 illustrates a detail view of the cutting tool of figure 6 in an open configuration.

### Detailed description

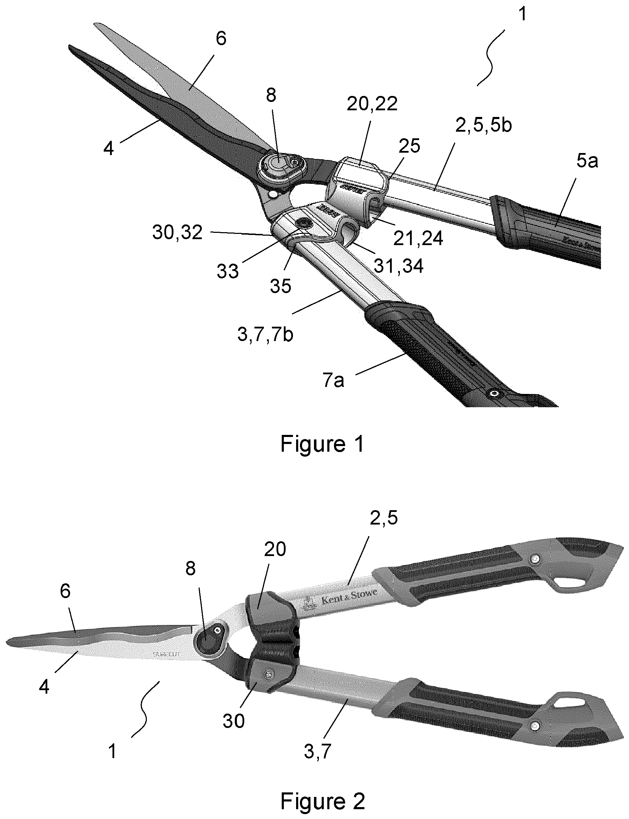

Figures 1 and 2 illustrate a cutting tool 1 according to an aspect of the present invention. The cutting tool 1 is in the form of hedge shears. The cutting tool 1 comprises a first shear part 2 and a second shear part 3. The first shear part 2 comprises a blade portion 4 and a lever section 5. Likewise, the second shear part 3 comprises a blade portion 6 and a lever section 7. Each blade portion 4,6 provides a cutting blade for cutting and/or pruning branches, plants and the like. Each lever section 5,7 includes a handle 5a,7a at or towards a distal end thereof, and a shock absorption arrangement 20,30 at or towards the opposite end thereof. Each lever section 5,7 further includes a shaft 5b,7b adjacent to the blade portion 4,6. In this example, each shock absorption arrangement 20,30 and each handle 5a,7a is attached to a respective shaft 5b,7b. In optional embodiments, each shock absorption arrangement 20,30 could be attached to a different part of a respective lever section, such as the handle.

In use, the first shear part 2 and second shear part 3 are able to rotate with respect to each other. The first and second shear parts 2, 3 are configured to rotate around a pivot mechanism 8. The first and second shear parts 2, 3 are rotatably held together by the pivot mechanism 8. In figure 1 the blades 4,6 of the hedge shears 1 are in an open position ready to make a cut. In figure 2 the blades of the hedge shears 1 are in their closed or stop position. In the open position (figure 1), the shock absorption arrangements 20,30 are separated by a distance. In the closed or stop position (figure 2), the shock absorption arrangements 20,30 are in contact with one another. As will be appreciated, the shock absorption arrangements 20,30 are able to make contact with one another over a limited range of angles between the first and second shear parts 2,3.

The first shear part 2 comprises a shock absorption arrangement 20. The shock absorption arrangement 20 comprises a shock absorber 21 and an attachment arrangement 22. The shock absorber 21 and attachment arrangement 22 may be integrally formed. The second shear part 3 also comprises a shock absorption arrangement 30. The shock absorption arrangement 30 of the second shear part 3 is similar to the shock absorption arrangement 20 of the first shear part 2, with similar numerals (e.g. 21,31) denoting similar features. The shock absorption arrangements 20,30 are able to absorb the energy from an impact without getting in the way of the cutting blades or the hands of the user.

Each shock absorption arrangement 20,30 comprises an attachment arrangement 22,32 which facilitates attachment of the respective shock absorption arrangement 20,30 to a shear part 2,3 of the cutting tool 1. The attachment arrangements 22,32 allows the shock absorption arrangements 20,30 to be rigidly fixed with respect to a shear part 2,3 of the cutting tool 1.

Each attachment arrangement 22,32 includes a hole or aperture 25,35 through which a lever section 5,7 (in particular, a respective shaft 5b,7b of a respective lever section) extends, in use. Each hole or aperture 25,35 is configured to retain the respective shock absorption arrangement 20,30 on the shaft 5b,7b of the respective lever section 5,7, for example via an interference fit or a friction fit. Each lever section 5,7 passes through the attachment arrangement 22,32 (i.e. through a respective hole or aperture 25,35) of a respective shock absorption arrangement 20,30. The hole or aperture 25,35 of each attachment arrangement 22,32 extends along an axis (e.g. a linear or substantially linear axis) which is parallel or substantially parallel to the axis of the through hole 24,34 in the shock absorber 21,31. In this example, each hole or aperture 25,35 is configured to completely surround and encircle part of the shaft 5b,7b of a lever section 5,7 of the cutting tool.

Each shock absorption arrangement 20,30 is fixed to an end of a respective lever section 5,7 at or near the blade portion 4,6 thereof. Each shock absorption arrangement 20 is fixed to a lever section 5 by a fastener (such as a screw 33) which in use passes through the respective attachment arrangement 22,32 and into the respective lever section 5,7.

Each shock absorber 21,31 is at least partly made from a resilient material, for example rubber or foam. The resilient material can be used to absorb energy. In this example, each shock absorber 21,31 takes the form of a tapered hollow tube. Each shock absorber 21,31 extends along an axis (e.g. a linear or substantially linear axis) and has a cut out or hole 24,34 along its axis. The cutouts or holes are configured to allow the respective shock absorbers 21,31 to flex, in use. The shock absorbers 21,31 are configured for absorbing the impact created by the closure of the respective blades, handles or shafts of the first and second shear parts 2,3.

Each cut out or hole 24,34 extends along the full length of the respective shock absorber 21,31. In other words, each shock absorber 21,31 includes a through hole. This allows compression of each shock absorber 21,31 along a direction perpendicular or substantially perpendicular to the axis of the cutout or hole 24,34 (i.e. the hole in the shock absorber 21,31 forming the hollow tube). In this example, the axis of the cutout or hole 24,34 is parallel or substantially parallel to the longest dimension of the shear part to which the respective shock absorber 21,31 is attached. The open ends of the cutouts or holes 24,34 are only accessible from certain angles, and one open end of each cutout or hole 24,34 is partly obscured by the blade portions 4,6. In this way, the cutouts or holes 24,34 are configured to allow the respective shock absorbers 21,31 to flex while reducing the likelihood of material becoming lodged in the cutouts or holes 24,34, in use.

Each shock absorber 21,31 is tapered such that the cross sectional area of the shock absorber 21,31 is smaller at one end, and linearly increases along the axis of the shock absorber 21,31. The cross sectional area of the shock absorber 21,31 is smallest proximal the respective blade portion 4,6. Each hole 24,34 may be similarly tapered. The angle of the taper corresponds to the appropriate angle to allow the first and second shear parts 2,3 to rest in their stop position (c.f. figure 2). The taper ensures that the contacting surfaces of the shock absorbers 21.31 will be suitably large, ensuring that the force of an impact will be spread across the entire length of the respective shock absorbers 21,31.

In use, each shock absorption arrangement 20,30 is configured to absorb an impact resulting from the blade portions 4,6 when they come to their stop position. In particular, the shock absorber 21 of shock absorption arrangement 20 is configured to absorb an impact from the shock absorber 31 of shock absorption arrangement 30, and vice versa. In this way, each shock absorption arrangement 20,30 is configured to prevent the uncomfortable jarring which results from the impact of the blade portions 4,6 and/or lever sections 5,7 when they come to their stop position.

In optional embodiments, the cutting tool 1 may include only one shock absorption arrangement (e.g. shock absorption arrangement 20) on one lever section 5. In such optional embodiments, a bumper (which is a solid ring which surrounds a respective shaft 7b of the lever section 7) may be located on the corresponding part of the other lever section 7. In such optional embodiments, the shock absorber 21 of shock absorption arrangement 20 will be configured to absorb an impact from the bumper. In other optional embodiments, the cutting tool 1 may not include a bumper and the shock absorber 21 of shock absorption arrangement 20 may be configured to absorb a direct impact from the other lever section 7.

Each shock absorption arrangement 20,30 provides a spring back effect, due to the resilience of each shock absorption arrangement 20,30. When the blade portions 4,6 are brought to their stop positions at the end of a cutting action (e.g. figure 2), the shock absorbers 21,31 will come in to contact with one another. After initial impact, each shock absorber 21,31 will continue to move towards the other shock absorber 31,21 and become compressed, resulting in a cushioning effect for the user. After reaching maximum compression, each shock absorber will 'spring back' towards its initial shape. This acts to push apart the shock absorption arrangements 20,30 as well as the handles 5,7 and blade portions 4,6. This benefits the user as it opens the blades up again ready for the next cut.

The exemplary shock absorption arrangement disclosed herein is adaptable: the same design can be used for a wide range of cutting tools.

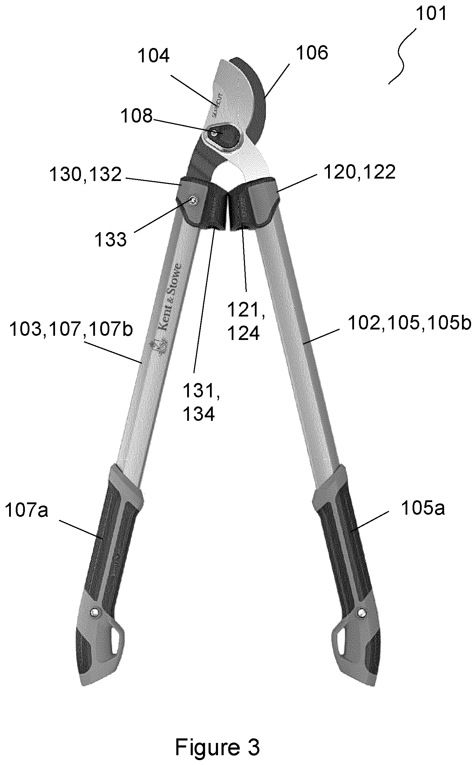

Figure 3 illustrates a cutting tool 101 according to the present invention. The cutting tool 101 is in the form of loppers. The cutting tool 101 is similar to the cutting tool 1 of the previous embodiment, with similar numerals (e.g. 20,120) denoting similar features. The cutting tool 101 is distinguished from the cutting tool 1 of the previous embodiment by the shape of the blade portions 104,106, and the lengths of the lever sections 105,107 (in particular, the lengths of the shafts 105b,107b).

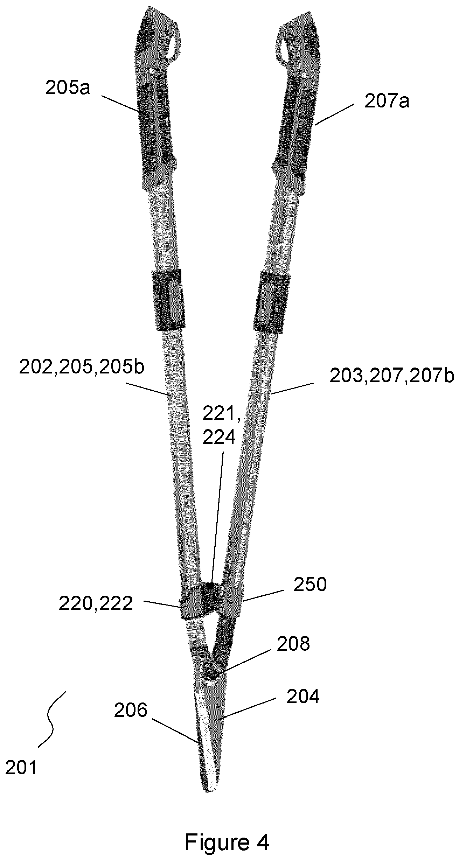

Figure 4 illustrates a cutting tool 201 according to the present invention. The cutting tool 201 is in the form of lawn shears. The cutting tool 201 is similar to the cutting tools 1,101 of the previous embodiments, with similar numerals (e.g. 20,120,220) denoting similar features. The cutting tool 201 is distinguished from the cutting tools 1,101 of the previous embodiments by the shape of the blade portions 204,206, and the extendible lever sections 205,207 (in particular, the extendible shafts 205b,207b). The cutting tool 201 is further distinguished from the cutting tools 1,101 of the previous embodiments in that only one of the shear parts includes a shock absorption arrangement 220. On the other shear part there is a bumper 250 which is a solid resilient (rubber or foam) ring which surrounds a shaft of a lever section.

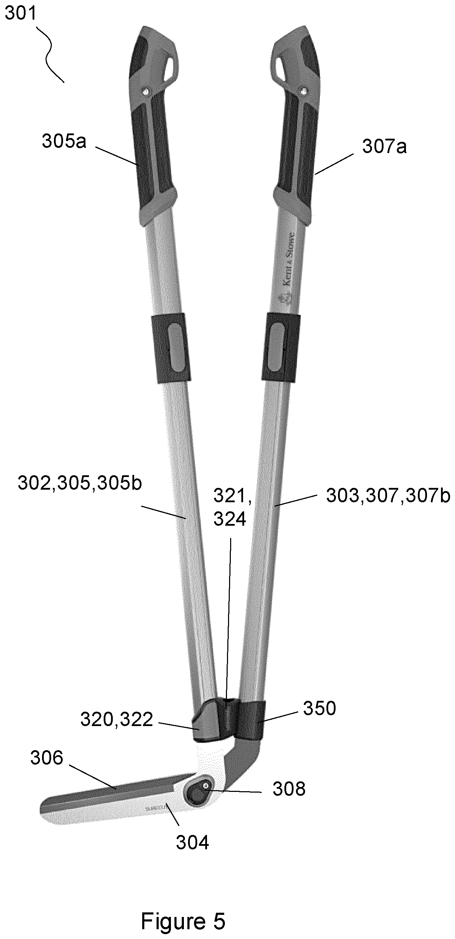

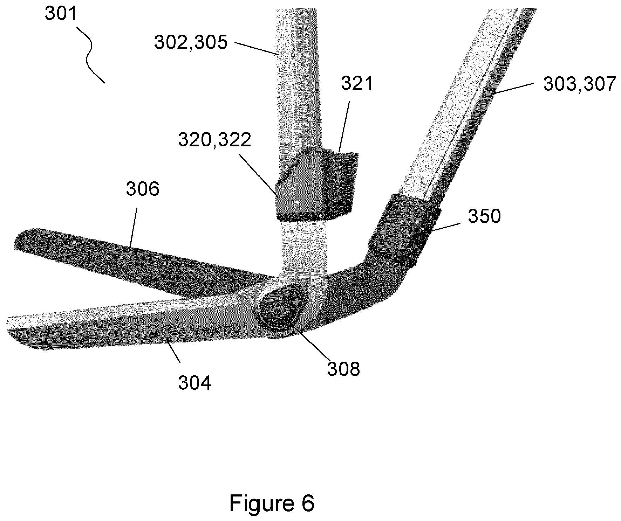

Figures 5 and 6 illustrate a cutting tool 301 according to the present invention. The cutting tool 301 is in the form of edging lawn shears. The cutting tool 301 is similar to the cutting tools 1,101,201 of the previous embodiments, with similar numerals (e.g. 20,120,220,320) denoting similar features. The cutting tool 301 is distinguished from the cutting tools 1,101,201 of the previous embodiments by the shape of the blade portions 304,306, and by the fact that the blade portions extend in a direction which is not parallel to the lever sections 305,307. The cutting tool 301 is further distinguished from the cutting tools 1,101 of the first two embodiments in the extendible lever sections 305,307 (in particular, the extendible shafts 305b,307b). Furthermore, like the third embodiment 201, only one of the shear parts includes a shock absorption arrangement 320. On the other shear part there is a bumper 350 which is a solid resilient (rubber or foam) ring which surrounds a shaft of a lever section.

As will be understood by the skilled person, the example embodiments presented above can be modified in a number of ways without departing from the scope of the invention. For example, the shock absorption arrangements disclosed herein could also be used with cutting tools other than garden cutting tools. The shock absorption arrangements disclosed herein could be applied to shears, hedge shears, lawn sheards, scissors, garden scissors, loppers or secateurs. In some embodiments the cutting tool is a garden cutting tool such as shears, hedge shears, lawn shears, scissors, garden scissors, loppers or secateurs.

The features disclosed in the foregoing description or the following drawings, expressed in their specific forms or in terms of a means for performing a disclosed function, or a method or a process of attaining the disclosed result, as appropriate, may separately, or in any combination of such features be utilised for realising the invention in diverse forms thereof.

## Claims

1. A cutting tool comprising a first shear part rotatably connected to a second shear part, wherein at least one of the first and second shear parts comprises a cutting blade and wherein at least one of the first and second shear parts comprises shock absorption means for absorbing the impact created by the closure of the first and second shear parts.

2. A cutting tool according to claim 1, wherein the shock absorption means comprises a resilient shock absorbing member.

3. A cutting tool according to claim 1 or claim 2, wherein the shock absorption means is at least partly made from a resilient material, for example rubber or foam.

4. A cutting tool according to any preceding claim, wherein the shock absorption means comprises at least one cutout or hole.

5. A cutting tool according to any preceding claim, wherein the shock absorption means has at least one cutout or hole which extends along an axis, and wherein the axis of the at least one cutout or hole is parallel or substantially parallel to the longest dimension of at least one of the first shear part and the second shear part.

6. A cutting tool according to claim 5 when dependent on claim 2, wherein the resilient shock absorbing member is tapered along the axis of the cutout or hole.

7. A cutting tool according to any preceding claim, wherein the shock absorption means is configured to absorb an impact from at least one of the first shear part and the second shear part.

8. A cutting tool according to any preceding claim, wherein the shock absorption means is configured to absorb an impact from a handle or shaft of a shear part, a bumper and/or another shock absorbing means.

9. A cutting tool according to any preceding claim, wherein the shock absorption means comprises an attachment means for attaching the shock absorption means to a shear part of the cutting tool, preferably wherein the attachment means is attachable to a shear part of the cutting tool via a fixing means.

10. A cutting tool according to claim 9, wherein the attachment means facilitates attachment of the shock absorption means to a handle or shaft of a shear part of the cutting tool, preferably wherein at least a part of a handle or shaft of a shear part of the cutting tool passes through the attachment means, in use.

11. A cutting tool according to claim 10, wherein the attachment means comprises an aperture to allow at least a part of a handle or shaft of a shear part of the cutting tool passes through the attachment means, optionally wherein the aperture is configured to provide an interference fit or friction fit between the attachment means and the handle or shaft of a shear part of the cutting tool.

12. A cutting tool according to any preceding claim, wherein the cutting tool comprises exactly one shock absorption means.

13. A cutting tool according to any one of claims 1 to 11, wherein the cutting tool comprises two shock absorption means.

14. A cutting tool according to claim, wherein the cutting tool is a pair of shears such as hedge shears or lawn shears, a pair of scissors, loppers or secateurs.

15. A shock absorption means for attachment to a shear part or handle of a cutting tool according to any preceding claim.
